# EUROPEAN PATENT SPECIFICATION

(11) **EP 3 209 825 B1**
(45) Date of publication and mention of the grant of the patent: **09.11.2022**
(21) Application number: 15853135.0
(22) Date of filing: 22.10.2015
(51) Int. Cl.: B60N 2/58, D05B 15/00

(54) **APPARATUS AND METHODS FOR STITCHING VEHICLE INTERIOR COMPONENTS**
VORRICHTUNG UND VERFAHREN ZUM NÄHEN VON FAHRZEUGINNENTEILEN
APPAREIL ET PROCÉDÉ DE COUTURE DE COMPOSANTS INTÉRIEURS DE VÉHICULES

(30) Priority: 22.10.2014 US 201414521390
(43) Date of publication of application: 30.08.2017
(73) Proprietor: Inteva Products, LLC, Troy, MI 48084 (US)
(72) Inventor: WENZEL, Edward J., Troy, Michigan 48098 (US); HABHAB, Ramez M., Rochester Hills, Michigan 48307 (US); ECKHOUT, Patrick, Rochester, Michigan 48307 (US)
(74) Representative: Germain Maureau
(86) International application number: PCT/US2015/056907
(87) International publication number: WO 2016/065141

(56) References cited:
- DE-A1- 3 703 070
- JP-A- 2001 162 068
- JP-A- 2006 273 312
- US-A- 1 731 221
- US-A- 2 529 575
- US-A- 2 673 537
- US-A- 3 055 323
- US-A- 4 488 498
- US-A- 6 095 069
- US-A1- 2013 009 416
- US-A1- 2013 147 228
- US-A1- 2015 158 115

## Description

### CROSS REFERENCE TO RELATED APPLICATIONS

This application claims priority to U.S. Patent Application Serial No. 14/521,390 filed October 22, 2014, which is a continuation-in-part of U.S. Patent Application Serial No. 14/450,609 filed August 4, 2014, which is also a continuation-in-part of U.S. Patent Application Serial No. 13/543,489 filed July 6, 2012, which claims the benefit of U.S. Provisional Application Serial No. 61/505,836, filed July 8, 2011.

This application is also a continuation-in-part of U.S. Patent Application Serial No. 14/450,609 filed August 4, 2014, which is a continuation-in-part of U.S. Patent Application Serial No. 13/543,484 filed July 6, 2012, now U.S. Patent No. 8,833,829, which claims the benefit of U.S. Provisional Application Serial No. 61/505,833, filed July 8, 2011.

### BACKGROUND

This invention relates to an interior structure for a vehicle interior. More particularly, the invention relates to an apparatus for stitching vehicle interior components.

Currently, most stitching found in an automotive interior is of the functional variety, wherein two or more pieces of material (leather, vinyl, TPO, cloth, etc.) are cut from a pattern and sewn together (cut-n-sew) prior to being wrapped around a component such as a seat cushion, head rest, arm rest, console lid, instrument panel substrate, etc. Such functional stitching is very labor intensive and is normally used only where required on low and mid-class vehicles. Functional stitching on decorate components such as instrument panel retainers and door panels has typically been restricted to higher class vehicles due to cost.

In recent years, automotive original equipment manufacturers (OEMs) have shown an interest in applying the "stitched" look to more vehicles over a wider range of price classes. A simulated non-functional stitch has been used in some applications; however, the ability to offer a simulated stitch in a contrasting color is not production feasible at this time. Additionally, more OEMs are requested that a real or "live" stitch be used on decorate components to provide the look and feel of a true cut-n-sew component. See description of the prior art on page 16 under paragraph [0078] of the description.

Accordingly, it is desirable to provide a live, non-functional stitch on decorative automotive trim components.

### SUMMARY OF THE INVENTION

The invention relates to a method according to independent claim 1.

### BRIEF DESCRIPTION OF THE DRAWINGS

Other features, advantages and details appear, by way of example only, in the following description of embodiments, the description referring to the drawings in which:
FIG. 1 is a cross-sectional view of an interior portion of a component stitched in accordance with an exemplary embodiment of the present invention; and
FIG. 2 is a flow chart illustrating a method according to one exemplary embodiment that is not in accordance with the present invention;
FIGS. 3A-3F illustrate one non-limiting use of a robot to drive a sewing head over a stationary part on a fixture;
FIG. 4 is a schematic illustration of one non-limiting configuration of an apparatus operably coupled to the robot illustrated in FIGS. 3A-3F;
FIG. 5 is a view of a single layer part 48 according to one non-limiting embodiment of the present invention; and
FIG. 5A is a view along lines 5A-5A of FIG. 5.

### DETAILED DESCRIPTION

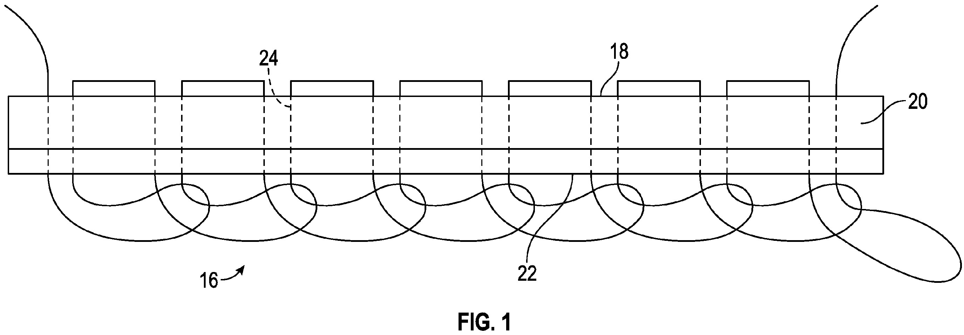

Turning now to the drawings, wherein to the extent possible like reference numerals are utilized to designate like components throughout the various views, in FIG. 1 it is seen that an interior portion 16 of a vehicle is illustrated. In one implementation interior portion 16 is a portion of an instrument panel of a vehicle.

As best illustrated in FIG. 1, the interior portion 16 is preferably of a multi-layered construction. This multi-layered construction preferably includes an outer skin layer 18 having a substantially smooth outer surface and an underside facing away from the outer surface. The outer skin layer 18 is preferably formed of a plastic material of substantial flexibility and aesthetically pleasing character.

In order to enhance the softness of portion 16, a layer of cushioning support material 20 is provided in the region below the outer skin layer 18. It is contemplated that the cushioning support material 20 may be of any number of different constructions although a foamed material such as cross linked polypropylene (XLPP) foam may be potentially preferred. A substrate panel or layer 22 of dimensionally stable plastic or other suitable material is preferably disposed below the cushioning support material.

According to the potentially preferred embodiment, the cushioning support material 20 and the substrate panel 22 thus serve cooperatively to provide a support structure for the outer skin layer 18.

It is contemplated that XLPP foam forming the cushioning support material 20 may be blown between the outer skin layer 18 and the substrate panel 22 so as to form a multi-layered composite structure of a form substantially as illustrated in FIG. 1. It is also contemplated that the cushioning material 20 may be attached to the outer skin layer 18 in a preliminary cladding operation so as to form a preliminary layered composite which may thereafter be applied across any substrate panel 22 as may be utilized. It is also contemplated that the cushioning material 20 may be attached to the substrate panel 22 in a preliminary cladding operation so as to form a preliminary layered composite which may thereafter be covered by the outer skin layer 18.

In accordance with an exemplary embodiment of the present invention live non-functional stitching can be applied interior portion in one of the following ways:
1) Stitch a pattern on an unformed single or multilayer construction of trim material and wrap the sewn trim sheet around a preformed/precut substrate;
2) Stitch a pattern on a preformed single or multilayer construction of trim material and bond the sewn trim preform to a preformed molded substrate; and
3) Stitch a pattern on a flat or relatively flat single or multilayer trim & substrate component construction.

As the part complexity and size increase, option 1 becomes impractical as unformed trim material can only be applied to relatively flat surfaces.

Option 2 requires that the size and shape of the preformed & stitched skin match that of the molded substrate nearly perfect. Also, option 2 requires that all surfaces in die draw have adequate draft in order to accommodate nesting without damage to the preform. All undercuts with Option 2 require automated or manual edge wrapping to finish.

Option 3 eliminates the fit and finish issues associated with option 2 but is limited by the ability of the sewing machine to reach confined areas of the part while possessing the capability to drive a needle through trim and substrate material of the component. Likewise, any backside features (ribbing, bosses, etc.) required for component structure or attachment cannot be located in the area directly behind/beneath the stitch path.

This application proposes a means to stitch through trim and substrate of a large, contoured soft trim clad automotive interior trim panel to eliminate the manufacturing cost and complexity associated with Option 2 above and be designed and manufactured in such a way that the stitching can be located directly above backside features if required.

Various exemplary embodiments of the invention described herein may include the use of a chain stitch pattern machine that uses an awl on the upper portion of the head to penetrate the trim and substrate of the interior component. After the awl exits a hole 24 it produced in the component, a needle with a hook protrudes into and through the hole 24 from the lower arm of the machine to grasp the thread held in position by a thread tensioner arm. Once hooked, the thread is pulled through the hole and through the loop from the previous stitch. The needle also advances the part to the next point of awl penetration as it pulls the thread down through the hole 24. The needle then advances to the hook position once again while the awl is engaged with the part so the part does not move and needle can move through the newly formed hole without hesitation once the awl exits the part. By utilizing an awl to produce the stitch hole, much more robust material constructions can be stitched (composites, metals, etc.) with minimal damage to the top surface of the part or the awl. Damage to the thread is minimized by the fact that the thread is not pulled back and forth through the hole multiple times as is the case with the lockstitch pattern. Very large tex threads can be used without concern for needle breakage.

The post bed stitch plate for such a chain stitch machine as described above can be a small as 10 mm x 10 mm, a significant reduction from previous robotic chain stitch plate dimension of 16 mm x 44 mm (of course, dimensions greater or less than these are considered to be within the scope of exemplary embodiments of the present invention). Access to very tight confines of parts is now possible, particularly through-plane radii wherein minimizing stitch plate length is critical.

The optimal machine configuration for sewing trim/substrate constructions in a manual fashion would be a high post, long arm machine. Manual or fixture guided part feed would be required.

The optimal machine configuration for robotic sewing would be dependent on the part design. The key factor again is the compact size of the stitch plate. Cylinder arm length and post bed height would depend on the application.

To facilitate the stitch location on the part, it is proposed that the backside or ISM side of the retainer be free and clear of any multiplane style line, ribs, bosses or any other obstruction that would prevent passage/contact of the stitch plate along the backside of the part for the entire stitch length. In the event that a backside feature cannot be moved from the stitch path, it is proposed that a separate component be molded which contains said feature and be subsequently attached the substrate after stitching. This secondary attachment could be performed via heat staking, IR welding, adhesives, or any other suitable method.

It is also proposed that the substrate material be locally reduced to a thickness more suitable for stitching should the need arise. For instance, a part with a nominal wall thickness of 2.5 mm could locally be reduced to 1.5 or 2.0 mm at a width of 15 to 20 mm along the stitch path. This depression in the backside of the part would also serve to locate a separate piece containing ribs or bosses as needed prior to attachment. Compression molding of the substrate panel could accommodate a reduction in nominal wall thickness from 2.0 mm to 1 - 1.5 mm in the stitching area. Of course, dimensions greater or less than the aforementioned values are considered to be within the scope of exemplary embodiments of the present invention.

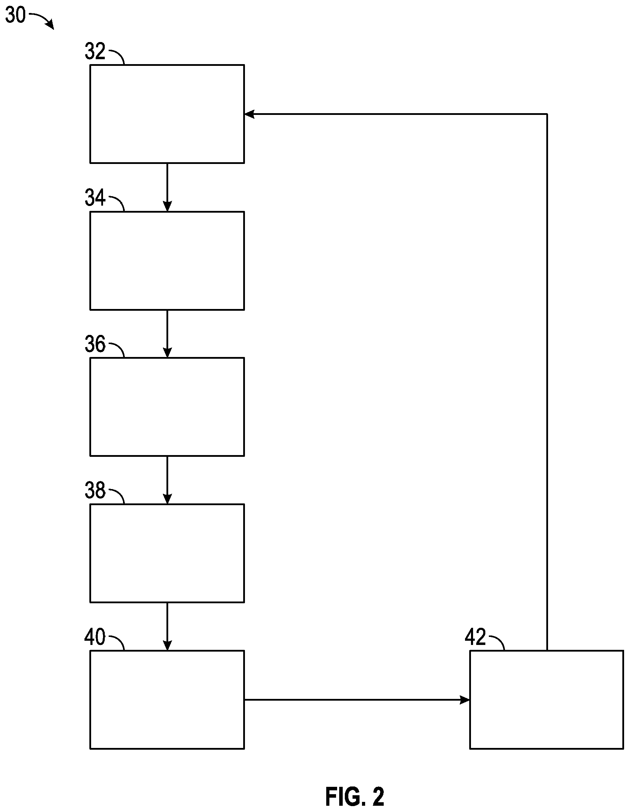

Referring now to FIG. 2 a flow chart 30 illustrating a method of applying stitching to an interior component according to one exemplary embodiment that is not in accordance with the present invention is provided. Here the interior component has an outer skin layer, a substrate layer and an intermediary layer located between the outer skin layer and the substrate layer.

At box 32, the outer skin layer, the substrate layer and the intermediary layer are penetrated with an awl to form a piercing therethrough. At box 34, the awl is retracted after the piercing is formed.

Thereafter and at box 36, a needle is inserted through the piercing (e.g., through the substrate layer, the intermediary layer and the outer skin layer) to grasp a thread positioned on the outer skin layer. Once the step of box 36 is completed, the thread is pulled through the outer skin layer, the intermediary layer and the substrate layer at box 38.

Afterwards and at box 40, the thread is looped with a previous stitch passed through the outer skin layer, the intermediary layer and the substrate layer, unless of course this is the first stitch. Once the step of box 40 is completed, the interior component is advanced or moved to another position relative to the awl and needle at box 42 and then the processes or steps of boxes 32-42 are repeated until a predetermined amount of stitches are applied to the interior component.

As mentioned above and in applications wherein robotic sewing is employed. A robot is used to drive or relocate a sewing head over a stationary part on a fixture.

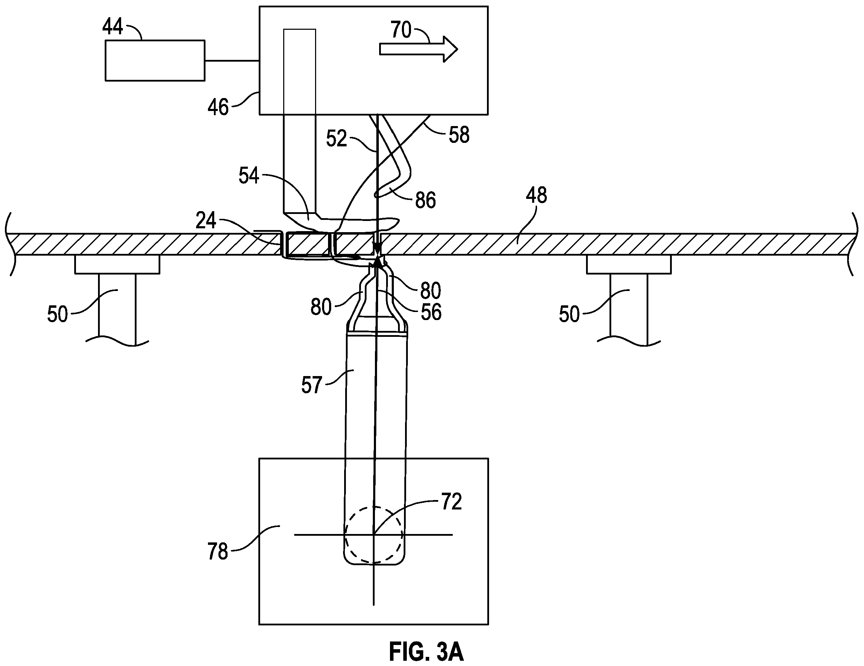

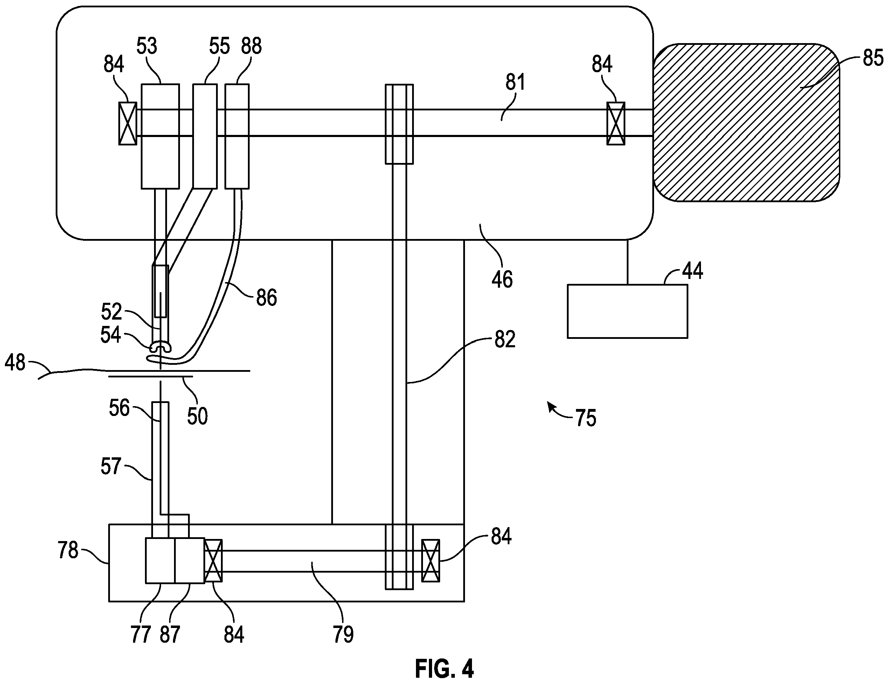

See for example, FIGS. 3A-3F and 4, wherein one non-limiting use of a robot 44 is employed to drive a sewing head 46 over a stationary part 48 on a fixture. Although robot 44 is shown schematically it is understood that robot 44 may comprise a portion of head 46 or head 46 may be located on an end of a robotic arm.

In FIG. 3A an awl 52 of the sewing head 46 begins upward motion towards top dead center (TDC) of its movement via a reciprocating mechanism or eccentric 53 that drives the awl 52 up and down as is known in the related arts. In other words and as used herein top dead center (TDC) of the awl 52 refers to the top most position of the awl 52 with respect to the part 48. The eccentric 53 is operably coupled to an upper drive shaft 81 as well as awl 52. Also shown is that a presser foot 54 begins to lift off of the surface of the part 48. The presser foot 54 is driven by or operably coupled to a separate eccentric 55 that is also tied or operable coupled to the upper drive shaft 81 of the sewing head 46. In one non-limiting configuration, the upper drive shaft 81 is driven by a motor 85. The movement of the presser foot 54 is coordinated with the movement of the awl 52, but driven by a separate eccentric 55 also operatively coupled to upper drive shaft 81. Accordingly and as the upper drive shaft 81 is rotated, eccentrics 53 and 55 operably coupled to the upper drive shaft 81 are rotated and the desired movement of awl 52 and presser foot 54 is achieved.

At the same time a needle 56 of a lower needle bar assembly 57 begins its upward motion to receive a new thread 58.

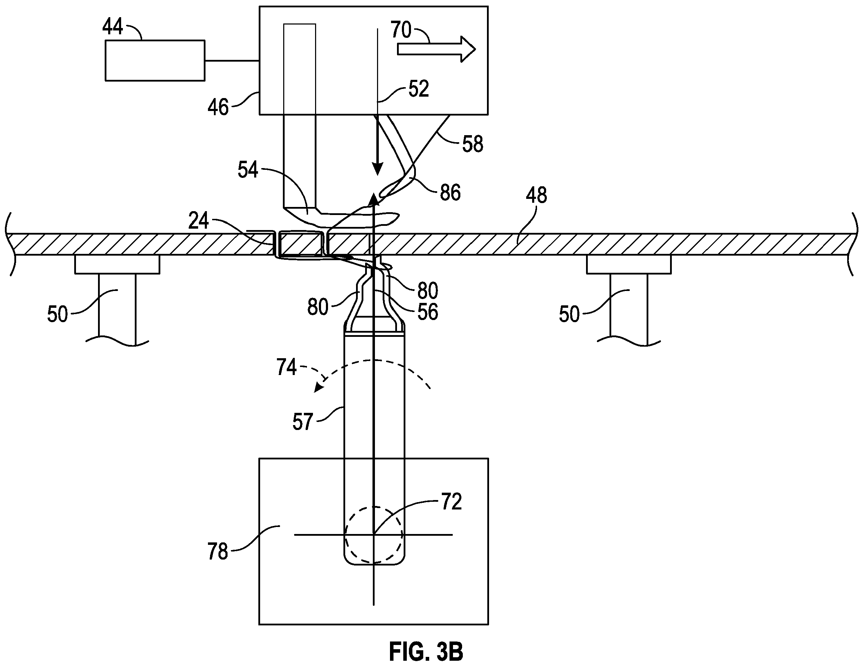

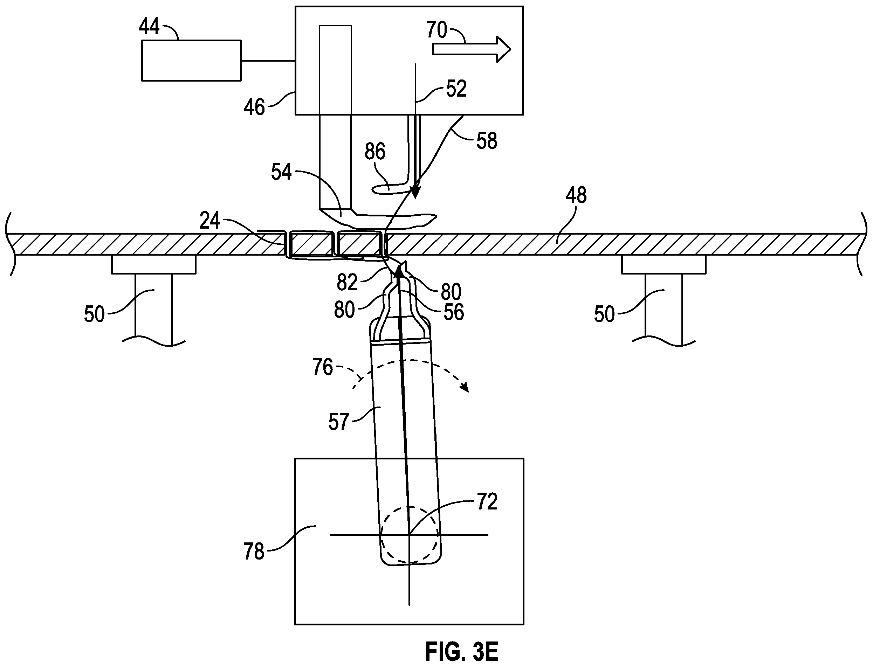

In FIG. 3A, the sewing head 46 is being driven forward in the direction of arrow 70 by robot 44 and the lower needle bar assembly 57 is in a full forward position. It being understood that the needle bar assembly 57 and needle 56 can pivot or rotate about axis 72 such that movement in the direction of arrows 74 (FIG. 3B) and 76(FIG. 3E) is possible.

In FIG. 3B, the awl 52 is shown near its top dead center (TDC) or its highest range of movement with respect to an eccentric 77 and the foot 54 lifts off the part 48 and the needle 56 continues upward motion to receive a new thread 58. The robot 44 continually drives the head 46 forward in the direction of arrow 70 and the lower needle bar assembly 57 begins rearward motion in the direction of arrow 74 via an eccentric 77 operably coupled to the needle bar assembly 57 and located in the lower drive mechanism 78.

See FIG. 4 for example, which illustrates one non-limiting configuration of an apparatus 75 configured to drive or move the awl 52 and the needle 56 in the desired directions. The eccentric 77 is located in lower drive mechanism 78 and is driven by or operably coupled to a lower drive shaft 79. As the eccentric 77 is rotated by the lower drive shaft 79, the eccentric 77 moves the needle bar assembly 57 in the directions of arrows 74 and 76. An eccentric 87 is also operably coupled to the lower drive shaft 79 as well as the needle 56 and eccentric 87 drives the upward and downward movement of the needle 56 as the lower drive shaft 79 is rotated thereby causing the desired movement of the needle 56 as the lower drive shaft 79 is rotated.

The lower drive shaft 79 is driven by the upper drive shaft 81 via a tensioned belt 82 or other means of direct coupling such that shafts 79 and 81 are operable coupled together and driven by a single motor 85. Both drive shafts 79 and 81 are rotatably received in bearings 84 located about apparatus 75.

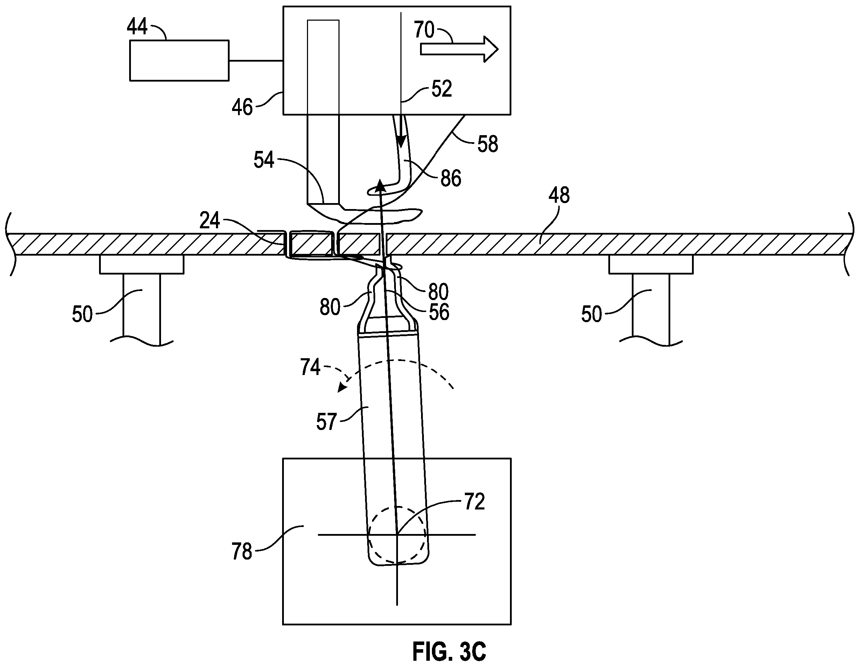

In FIG. 3C, the awl 52 is at top dead center of its range of movement with respect to the part 48 and thus is at its furthest distance from the part 48 and the foot 54 is also spaced from or off of the part 48 while the needle 56 is also near top dead center with respect to the driving mechanism that moves the needle 56 up and down as is known in the related arts. The robot 44 continually drives the head 46 forward in the direction of arrow 70 while the lower needle bar assembly 57 continues rearward motion as shown in FIG. 3C.

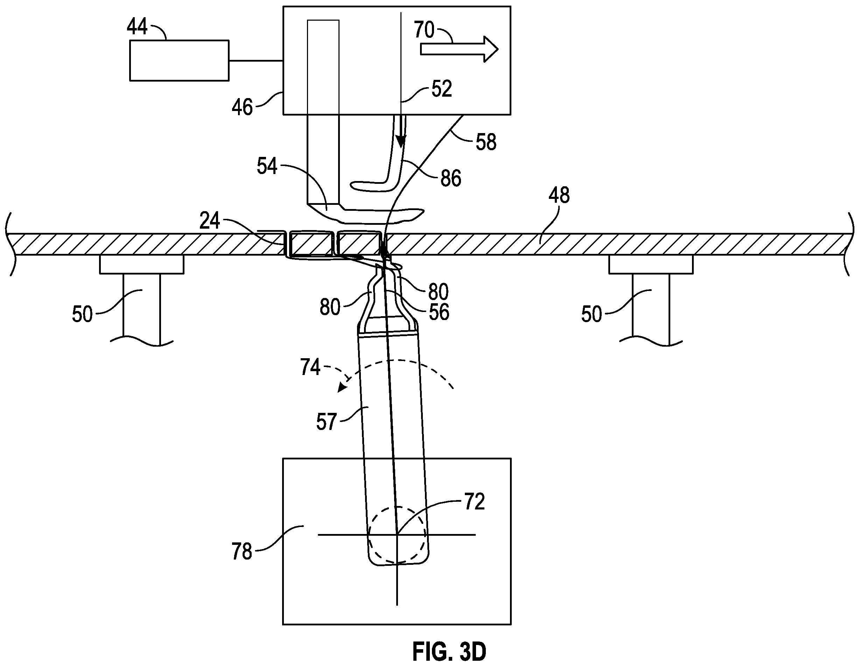

Referring now to FIG. 3D, the awl 52 begins its descent downward towards the part and the foot 54 is spaced or off from the part 48 while the needle 56 is upward through the part 48 and hooks and pulls the thread 58 through hole 24. The robot 44 continually drives the head 46 forward in the direction of arrow 70 and the lower needle bar 57 assembly continues its rearward motion in the direction of arrow 74.

In FIG. 3E, the awl 52 is shown descending while the foot 54 is now nearly down on the part 48. Here the needle 56 is shown pulling the hooked thread 58 through castoff brackets 80 and a prior loop 82 of thread is released from the castoff brackets 80. As illustrated, the robot 44 continually drives the head 46 forward in the direction of arrow 70 and the lower needle bar assembly 57 begins its forward motion in the direction of arrow 76 via drive mechanism 78.

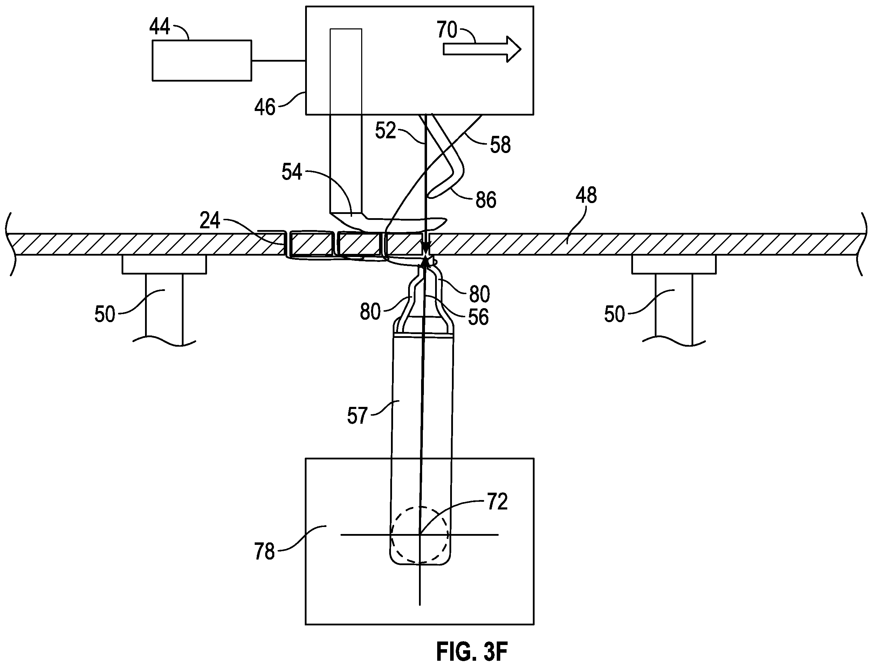

Referring now to FIG. 3F, the awl 52 is shown piercing the part 48 so that an opening 24 for needle 56 to pass through is made. Also shown is that the foot 54 is now down on the part 48. As the needle 56 begins its upward motion, it releases the thread 58 as it passes through the tip of the castoff brackets 80. Once again, the robot 44 continually drives the head 46 forward in the direction of arrow 70 while the lower needle bar assembly 57 is in a full forward position.

Accordingly and as illustrated in the above FIGS. and after the awl 52 exits a hole 24 it produced in the component 48, the needle 56 with a hook protrudes into and through the hole 24 from the lower arm of the machine to grasp the thread 58 held in position by a thread tensioner arm 86, whose movement is controlled by an eccentric 88 operably coupled to the upper drive shaft 81 as well as the thread tensioner arm 86 so that rotational movement of the upper drive shaft 81 causes the desired movement of the thread tensioner arm 86. Once hooked, the thread 58 is pulled through the hole 24 and through a loop from a previous stitch. As the robot 44 advances the sewing head 46 over the part 48, the needle 56 moves rearward relative to the forward movement of the sewing head 46 in the direction of arrow 70, staying engaged with the part 48 until it exits the hole 24 with the thread 58. The needle 52 is then advanced by the lower bar assembly 57, which is in turn driven by the eccentric 77 operably coupled to the lower drive shaft 79.

Therefore and in an alternative embodiment and in at least step 40, the robot 44 is used to drive the sewing head over a stationary part 48 placed on a fixture 50. Robotic sewing is particularly advantageous as the size of the part being sewn increases. For example and as the size of the part being sewn increases, the weight and handleability of the part become difficult for an operator to manage. Since proper sewing head orientation relative to the part is required to achieve a good stitch, and the repeatability of a robot cannot be matched with a human operator it is desirable to use a robotically driven sewing head and in particular, for applications wherein the size of the part being sewn is large. In one non-limiting embodiment and in the aforementioned robotic application, a 6 axis robot may be employed to relocate the sewing head with respect to the part. It is, of course, understood that other types of robots may be employed for use with the relocation of the sewing head.

The use of a robotic head is provided as an alternative to a manual operation that is not in accordance with the present invention. In the manual operation an operator of the apparatus 75 will feed the part or component 48 into a stationary or fixed apparatus 75 or sewing head 46 with respect to the part or component 48 being fed thereto and the needle 56 is used to advance the part 48 relative to the fixed sewing head 46 or apparatus 75. In other words, the needle 56 moves the part or component 48 with respect to the stationary apparatus or part 48. In this embodiment, the needle 56 while still in the part 48 via opening or hole 24 moves the part 48. Here, the sewing head 46 and/or apparatus 75 remains stationary and the needle 56 moves the part or component 48 as it pivots about axis 72. The needle 56, by virtue of it being at least partially located in hole or opening 24 of the part or component 48 when it is moved by eccentric 77 about axis 72, moves the part or component 48 with respect to the stationary apparatus 75 or stationary sewing head 46. See FIG. 4 for example, which illustrates one non-limiting configuration of an apparatus 75 configured to drive or move the awl 52 and the needle 56 in the desired directions. The eccentric 77 is located in lower drive mechanism 78 and is driven by or operably coupled to a lower drive shaft 79. As the eccentric 77 is rotated by the lower drive shaft 79, the eccentric 77 moves the needle bar assembly 57 in the directions of arrows 74 and 76. An eccentric 87 is also operably coupled to the lower drive shaft 79 as well as the needle 56 and eccentric 87 drives the upward and downward movement of the needle 56 as the lower drive shaft 79 is rotated thereby causing the desired movement of the needle 56 as the lower drive shaft 79 is rotated.

As used herein, sewing head 46 and/or apparatus 75 include at least the awl 52, the foot 54 and the lower needle bar assembly 57 and the necessary components (e.g., linkage, shafts, belts, eccentrics, bearings, motor, their housings, etc.) to cause their required movement, which collectively in one embodiment according to the present invention are moved by a robot or mechanism 44 with respect to a stationary part or component 48 or, in another embodiment that is not in accordance with the present invention, are alternatively stationary with respect to the part or component 48 and the part or component 48 is moved with respect to the stationary sewing head 46 and/or stationary apparatus 75 via movement of needle 56 about axis 72 as it is engaged in the piercing or opening 24 of the part or component 48.

In the present invention, the stationary part 48 comprises only a single layer for example, the substrate layer or substrate panel 22 (e.g., foam layer 20 and outer layer 18 are not used or employed and no other layers are applied). In one embodiment, the substrate panel 22 is formed from a dimensionally stable plastic or other suitable material such that a rigid panel or part is provided and for example no additional layers are required for decorative appearance or feel of the part's intended use. The substrate panel could also be formed from a material composite, which could but is not limited to, any number of different fiber laminates or concentrations of randomly oriented reinforcing fibers embedded within a matrix resin, provided that a top surface or show surface 92 of the composite substrate layer or panel 22 remains rigid. In this embodiment, the process cycle would be the same as sewing through the skin, foam and substrate but without the skin and foam since only a single substrate layer is used.

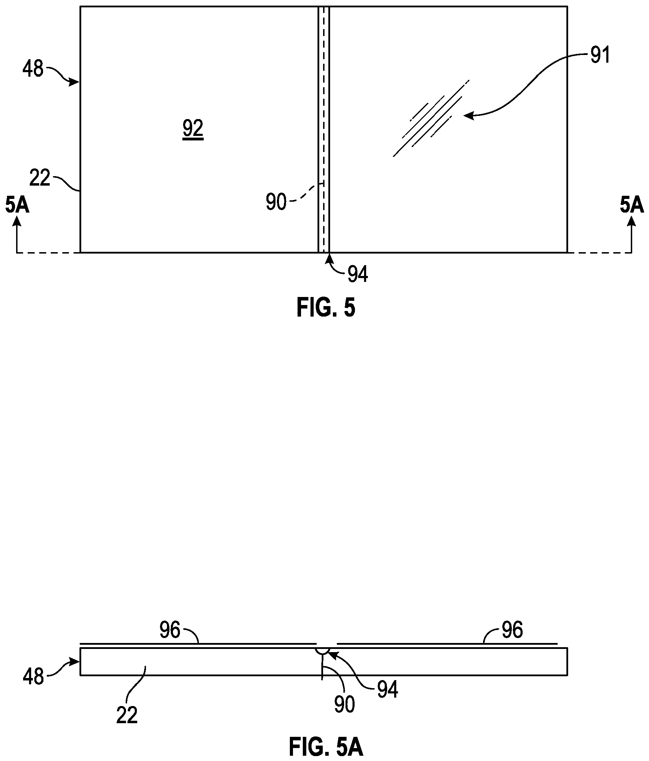

Referring to FIG. 5 and in one non-limiting embodiment, the single layer or stationary part 48 comprising only the substrate layer or panel 22 would have stitching 90 applied thereto. Here the stitching can be applied in any of the aforementioned steps and or processes.

Still further and in one non-limiting embodiment, the part 48 comprising only substrate layer or panel 22 may be grained 91 on the show surface 92 of the part 48 comprising only substrate layer or panel 22. In yet another alternative embodiment or in combination with the graining of show surface 92, the part 48 may be molded with a faux seam 94 that is molded into the part 48 for aesthetic purposes and for a functional guide for sewing machine purposes. The faux seam 94 may be configured as a protrusion or a depression or groove in the show surface 92. In yet another alternative embodiment, the faux seam 94 may be configured as a French seam or a deck seam or any other real functional looking seam.

It being understood that the faux seam 94 is not required to produce a stitched single layer stationary part 48 comprising only substrate layer or panel 22 but simply may be one alternative embodiment.

In still yet another alternative embodiment, the molded part comprising only substrate layer or panel 22 may be covered on its show surface 92 with a soft touch paint 96 such as that commonly found on automotive instrument panels prior to sewing to provide a more realistic "soft" feel upon contact. In other words, the soft touch paint 96 now provides the show surface 92 or at least a portion thereof and is the surface of the part 48 that is viewed and/or touched when the part 48 is installed in its desired location and the soft touch paint 96 provides a softer show or exterior surface than that of the material of the substrate layer or panel 22. Alternatively, the soft touch paint 96 may be applied after the sewing step. Still further, a non-soft touch paint or "standard" paint 96 (for example a paint used on any automotive interior trim panel) may be applied to the show surface 92 to cover any blemishes on the part surface 92 and provide an aesthetically pleasing surface (e.g., show surface 92). In other words, the paint 96 is now on the surface of the part 48 that is viewed and/or touched when the part 48 is installed in its desired location. Thus and in this embodiment, the part 48 comprises only substrate layer or panel 22 with a paint 96 applied to the show surface 92 in addition to the stitching 90, wherein the paint 96 may be applied before or after the stitching is applied and wherein this part 48 comprising only substrate layer or panel 22 may include or may exclude the molded faux seam 94.

In these embodiments or in any of the previous embodiments, the stitching 90 can be accomplished robotically, depending on part size and complexity.

Non-limiting embodiments disclosed herein not being part of the invention, are also directed to a method of applying stitching to an interior component, comprising an outer skin layer, a substrate layer and an intermediary layer located between the outer skin layer and the substrate layer, the method comprising: a) penetrating the outer skin layer, the substrate layer and the intermediary layer with an awl of a robotic sewing head to form a piercing therethrough; b) retracting the awl from the outer skin layer, the substrate layer and the intermediary layer; c) inserting a needle of the robotic sewing head through the piercing through the substrate layer, the intermediary layer and the outer skin layer to grasp a thread positioned on the outer skin layer; d) pulling the thread through the outer skin layer, the intermediary layer and the substrate layer; e) looping the thread with a previous stitch passed through the outer skin layer, the intermediary layer and the substrate layer; f) advancing the robotic sewing head to another position with respect to the interior component, wherein a backside of the substrate layer is free of obstructions; and g) repeating steps a-f until a predetermined amount of stitches are applied to the interior component.

In another embodiment not being part of the invention, and disclosed in at least paragraph 0060, the outer skin layer, is formed from the group consisting of vinyl, leather and thermoplastic polyolefin; and the intermediary layer is a foam and the substrate layer is formed from plastic.

In another embodiment, not being part of the invention, disclosed in at least paragraphs 0060 and 0061 the outer skin layer, is formed from the group consisting of vinyl.

In another embodiment, not being part of the invention, an interior component is formed by any of the embodiments disclosed in at least paragraphs 0060-0062.

In another embodiment, not being part of the invention, the interior component is formed by any of the embodiments of paragraphs 0060-0063 and wherein the interior trim piece is a portion of an instrument panel of the vehicle.

In another embodiment, not being part of the invention, disclosed in at least paragraphs 0060-0064 the outer skin layer, is formed from leather and the intermediary layer is foam and the substrate layer is formed from plastic.

In another embodiment, not being part of the invention, disclosed in at least paragraphs 0060-0065 the backside of the substrate layer is free of obstructions along the entire stitch length.

In another embodiment, not being part of the invention, disclosed in at least paragraphs 0060-0066 the backside of the substrate layer is configured to have a separate component attached thereto, the separate component being free of any obstructions.

Non-limiting embodiments not being part of the invention, disclosed herein are in one embodiment directed to a method of applying stitching to an interior component, comprising an outer skin layer, a substrate layer and an intermediary layer located between the outer skin layer and the substrate layer, the method comprising: a) penetrating the outer skin layer, the substrate layer and the intermediary layer with an awl of a sewing head to form a piercing therethrough; b) retracting the awl from the outer skin layer, the substrate layer and the intermediary layer; c) inserting a needle of the sewing head through the piercing through the substrate layer, the intermediary layer and the outer skin layer to grasp a thread positioned on the outer skin layer; d) pulling the thread through the outer skin layer, the intermediary layer and the substrate layer; e) looping the thread with a previous stitch passed through the outer skin layer, the intermediary layer and the substrate layer; f) advancing the sewing head to another position with respect to the interior component, wherein a backside of the substrate layer is free of obstructions; and g) repeating steps a-f until a predetermined amount of stitches are applied to the interior component.

In another embodiment, not being part of the invention, disclosed in at least paragraph 0068 the outer skin layer, is formed from the group consisting of vinyl, leather and thermoplastic polyolefin; and the intermediary layer is a foam and the substrate layer is formed from plastic.

In another embodiment, not being part of the invention, disclosed in at least paragraphs 0060-0069 an interior component is provided wherein the interior component if formed by the method disclosed in at least paragraphs 0060-0069.

In another embodiment, not being part of the invention, disclosed in at least paragraphs 0060-0069, the interior component is formed by any of the embodiments of paragraphs 0060-0069 and the interior component is an interior trim piece of a vehicle.

In another embodiment, not being part of the invention, the interior component is formed by any of the embodiments of paragraph 0071 and the interior component is a portion of an instrument panel of the vehicle.

In another embodiment, not being part of the invention, disclosed in at least paragraphs 0060-0072 the outer skin layer, is formed from leather and the intermediary layer is foam and the substrate layer is formed from plastic.

In another embodiment, not being part of the invention, disclosed in at least paragraphs 0060-0073 the backside of the substrate layer is free of obstructions along the entire stitch length.

In another embodiment, not being part of the invention, disclosed in at least paragraphs 0060-0074 the backside of the substrate layer is configured to have a separate component attached thereto, the separate component being free of any obstructions.

In another embodiment, not being part of the invention, disclosed in at least paragraphs 0060-0075 the outer skin layer, is formed from the group consisting of vinyl, leather and thermoplastic polyolefin; and the intermediary layer is a foam and the substrate layer is formed from plastic.

US2013009416 A1 discloses a method of providing an interior component with stitching, comprising: penetrating only a single substrate layer of the interior component with an awl of a robotic sewing head to form a piercing therethrough, wherein the interior component only comprises the single substrate layer, retracting the awl from the single substrate layer, inserting a needle of the robotic sewing head through the piercing through the substrate layer to grasp a thread positioned on a show surface of the single substrate layer, pulling the thread through the single substrate layer, looping the thread with a previous stitch passed through the single substrate layer, advancing the robotic sewing head to another position with respect to the interior component, in order to form a plurality of stitches.

## Claims

1. A method of providing an interior component (16) with stitching, the method comprising:
a) penetrating only a single substrate layer (22) of the interior component (16) with an awl (52) of a robotic sewing head (46) to form a piercing (24) therethrough, wherein the interior component (16) only comprises the single substrate layer (22);
b) retracting the awl (52) from the single substrate layer (22);
c) inserting a needle (56) of the robotic sewing head (46) through the piercing (24) through the substrate layer (22) to grasp a thread (58) positioned on a show surface (92) of the single substrate layer (22);
c') rotating the needle (56) about a pivot axis (72) when said needle (56) is at least partially located in the piercing (24), thereby moving the awl (52) with respect to the single substrate layer (22) that remains stationary;
d) pulling the thread (58) through the single substrate layer (22);
e) looping the thread (58) with a previous stitch passed through the single substrate layer (22);
f) advancing the robotic sewing head (46) to another position with respect to the interior component (16) that remains stationary, wherein a backside of the single substrate layer (22) is free of obstructions; and
g) repeating steps a-f until a predetermined amount of stitches are applied to the interior component (16).

2. The method as in claim 1, wherein the substrate layer (22) is formed from plastic.

3. The method of claims 1 or 2, wherein the interior component (16) is an interior trim piece of a vehicle and wherein the substrate layer (22) is configured to have graining (91) on the show surface (92) of the substrate layer (22) preferably, wherein the interior trim piece is a portion of an instrument panel of the vehicle.

4. The method of claims 1 or 2, wherein the interior component (16) is an interior trim piece of a vehicle or wherein the interior trim piece is a portion of an instrument panel of the vehicle.

5. The method as in any of the preceding claims, wherein the substrate layer (22) is formed from plastic and molded with a faux seam (94).

6. The method of claims 1, 2 and 5, wherein the backside of the substrate layer (22) is free of obstructions along the entire stitch length.

7. The method of claim 6, wherein the interior component (16) is an interior trim piece of a vehicle preferably wherein the interior trim piece is a portion of an instrument panel of the vehicle.

8. The method of claims 1, 2 and 5 wherein the backside of the substrate layer (22) is configured to have a separate component attached thereto, the separate component being free of any obstructions.

9. The method of claim 8, wherein the interior component (16) is an interior trim piece of a vehicle preferably wherein the interior trim piece is a portion of an instrument panel of the vehicle.

10. The method of claims 1, 2, 5 and 9, wherein the substrate layer (22) is formed from plastic and a layer of soft touch paint (96) is applied to the show surface (92) of the interior component (16) after sewing in order to provide softer, more durable show surface than that of the material of the substrate layer (22).

## Patentansprüche

1. Verfahren zum Versehen einer Innenraumkomponente (16) mit Nähten, wobei das Verfahren umfasst:
a) Durchstechen von nur einer einzelnen Substratschicht (22) der Innenraumkomponente (16) mit einer Ahle (52) eines robotischen Nähkopfes (46), um ein Loch (24) dadurch zu bilden, wobei die Innenraumkomponente (16) nur die einzelne Substratschicht (22) umfasst;
b) Zurückziehen der Ahle (52) aus der einzelnen Substratschicht (22);
c) Einführen einer Nadel (56) des robotischen Nähkopfes (46) durch das Loch (24) durch die Substratschicht (22), um einen Faden (58) zu greifen, der auf einer Schaufläche (92) der einzelnen Substratschicht (22) positioniert ist;
c') Drehen der Nadel (56) um eine Drehachse (72), wenn sich die Nadel (56) zumindest teilweise im Loch (24) befindet, wodurch die Ahle (52) bezüglich der einzelnen Substratschicht (22) bewegt wird, die stationär bleibt;
d) Ziehen des Fadens (58) durch die einzelne Substratschicht (22);
e) Umschlingen des Fadens (58) mit einer vorherigen Masche, die durch die einzelne Substratschicht (22) geführt wurde;
f) Vorrücken des robotischen Nähkopfes (46) zu einer anderen Position bezüglich der Innenraumkomponente (16), die stationär bleibt, wobei eine Rückseite der einzelnen Substratschicht (22) frei von Hindernissen ist; und
g) Wiederholen der Schritte a - f, bis eine vorbestimmte Menge an Maschen an der Innenraumkomponente (16) appliziert ist.

2. Verfahren nach Anspruch 1, wobei die Substratschicht (22) aus Kunststoff gebildet ist.

3. Verfahren nach den Ansprüchen 1 oder 2, wobei es sich bei der Innenraumkomponente (16) um ein Innenverkleidungsstück eines Fahrzeugs handelt und wobei die Substratschicht (22) konfiguriert ist, vorzugsweise eine Maserung (91) auf der Schaufläche (92) der Substratschicht (22) aufzuweisen, wobei das Innenverkleidungsstück ein Teil einer Instrumententafel des Fahrzeugs ist.

4. Verfahren nach den Ansprüchen 1 oder 2, wobei es sich bei der Innenraumkomponente (16) um ein Innenverkleidungsstück eines Fahrzeugs handelt oder wobei das Innenverkleidungsstück ein Teil einer Instrumententafel des Fahrzeugs ist.

5. Verfahren nach einem der vorstehenden Ansprüche, wobei die Substratschicht (22) aus Kunststoff gebildet ist und mit einer Kunstnaht (94) geformt wird.

6. Verfahren nach den Ansprüchen 1, 2 und 5, wobei die Rückseite der Substratschicht (22) entlang der gesamten Stichlänge frei von Hindernissen ist.

7. Verfahren nach Anspruch 6, wobei es sich bei der Innenraumkomponente (16) um ein Innenverkleidungsstück eines Fahrzeugs handelt, vorzugsweise wobei das Innenverkleidungsstück ein Teil einer Instrumententafel des Fahrzeugs ist.

8. Verfahren nach den Ansprüchen 1, 2 und 5, wobei die Rückseite der Substratschicht (22) konfiguriert ist, eine separate daran befestigte Komponente aufzuweisen, wobei die separate Komponente frei von jeglichen Hindernissen ist.

9. Verfahren nach Anspruch 8, wobei es sich bei der Innenraumkomponente (16) um ein Innenverkleidungsstück eines Fahrzeugs handelt, vorzugsweise wobei das Innenverkleidungsstück ein Teil einer Instrumententafel des Fahrzeugs ist.

10. Verfahren nach den Ansprüchen 1, 2, 5 und 9, wobei die Substratschicht (22) aus Kunststoff gebildet ist und eine Schicht aus Soft-Touch-Lack (96) nach dem Nähen auf die Schaufläche (92) der Innenraumkomponente (16) aufgetragen wird, um eine weichere, haltbarere Schaufläche als die des Materials der Substratschicht (22) bereitzustellen.

## Revendications

1. Procédé pour fournir un composant intérieur (16) avec couture, le procédé comprenant :
a) le perçage seulement d'une couche de substrat unique (22) du composant intérieur (16) avec un poinçon (52) d'une tête de couture robotique (46) pour former une perforation (24) à travers celle-ci, dans lequel le composant intérieur (16) comprend seulement la couche de substrat unique (22) ;
b) la rétraction du poinçon (52) de la couche de substrat unique (22) ;
c) l'insertion d'une aiguille (56) de la tête de couture robotique (46) à travers la perforation (24) à travers la couche de substrat (22) pour saisir un fil (58) positionné sur une surface visible (92) de la couche de substrat unique (22) ;
c') la rotation de l'aiguille (56) autour d'un axe de pivotement (72) lorsque ladite aiguille (56) est au moins partiellement située dans la perforation (24), déplaçant ainsi le poinçon (52) par rapport à la couche de substrat unique (22) qui reste fixe ;
d) le tirage du fil (58) à travers la couche de substrat unique (22) ;
e) la mise en boucle du fil (58) avec un point précédent passé à travers la couche de substrat unique (22) ;
f) l'avancement de la tête de couture robotique (46) vers une autre position par rapport au composant intérieur (16) qui reste fixe, dans lequel un côté arrière de la couche de substrat unique (22) est exempt d'obstructions ; et
g) la répétition des étapes a-f jusqu'à ce qu'une quantité prédéterminée de points soit appliquée au composant intérieur (16).

2. Procédé selon la revendication 1, dans lequel la couche de substrat (22) est formée à partir d'une matière plastique.

3. Procédé de la revendication 1 ou 2, dans lequel le composant intérieur (16) est une pièce de garniture intérieure d'un véhicule et dans lequel la couche de substrat (22) est configurée pour avoir un grainage (91) sur la surface visible (92) de la couche de substrat (22) de préférence, dans lequel la pièce de garniture intérieure est une partie d'un tableau de bord du véhicule.

4. Procédé de la revendication 1 ou 2, dans lequel le composant intérieur (16) est une pièce de garniture intérieure d'un véhicule ou dans lequel la pièce de garniture intérieure est une partie d'un tableau de bord du véhicule.

5. Procédé selon l'une des revendications précédentes, dans lequel la couche de substrat (22) est formée à partir d'une matière plastique et moulée avec une fausse couture (94).

6. Procédé des revendications 1, 2 et 5, dans lequel le côté arrière de la couche de substrat (22) est exempt d'obstructions sur toute la longueur de point.

7. Procédé de la revendication 6, dans lequel le composant intérieur (16) est une pièce de garniture intérieure d'un véhicule, de préférence, dans lequel la pièce de garniture intérieure est une partie d'un tableau de bord du véhicule.

8. Procédé des revendications 1, 2 et 5, dans lequel le côté arrière de la couche de substrat (22) est configuré pour avoir un composant séparé fixé à celui-ci, le composant séparé étant exempt de toute obstruction.

9. Procédé de la revendication 8, dans lequel le composant intérieur (16) est une pièce de garniture intérieure d'un véhicule, de préférence, dans lequel la pièce de garniture intérieure est une partie d'un tableau de bord du véhicule.

10. Procédé des revendications 1, 2, 5 et 9, dans lequel la couche de substrat (22) est formée à partir d'une matière plastique et une couche de peinture douce au toucher (96) est appliquée à la surface visible (92) du composant intérieur (16) après la couture afin de fournir une surface visible plus douce et plus durable que celle du matériau de la couche de substrat (22).
